# EUROPEAN PATENT SPECIFICATION

(11) **EP 2 513 475 B1**
(45) Date of publication and mention of the grant of the patent: **05.02.2020**
(21) Application number: 10790961.6
(22) Date of filing: 14.12.2010
(51) Int. Cl.: F03D 7/02

(54) **MAGNETIC ACTIVE FLAP**
AKTIVE MAGNETKLAPPE
RABAT ACTIF MAGNÉTIQUE

(30) Priority: 14.12.2009 EP 09179056
(43) Date of publication of application: 24.10.2012
(73) Proprietor: LM Wind Power A/S, 6000 Kolding (DK)
(72) Inventor: GRABAU, Peter, DK-6000 Kolding (DK)
(74) Representative: COPA Copenhagen Patents
(86) International application number: PCT/EP2010/069602
(87) International publication number: WO 2011/073178

(56) References cited:
- WO-A1-2004/099608
- WO-A2-02/38442
- WO-A2-2010/135552

## Description

### Technical Field

The present invention relates to a wind turbine blade for a rotor of a wind turbine having a substantially horizontal rotor shaft and a hub connected to the rotor shaft, the blade extending in a substantially radial direction from the hub, when mounted to the hub, wherein the blade comprises: a profiled contour comprising a pressure side and a suction side and a leading edge and a trailing edge connecting the pressure side and the suction side, a lift regulating device, and an operation device comprising an electromagnet configured to operate the lift regulating device between a first state and a second state.

### Background Art

Wind turbines for converting wind energy to electrical energy are only able to operate in wind speeds of a certain limit, called the cut-out wind speed. The higher the cut-out wind speed is, the longer a wind turbine may be operated during a storm. There is a need for improving the performance of wind turbine blades at high wind speeds, thereby allowing operation of the wind turbine to operate at a broader wind speed range, thus providing a higher annual energy production.

WO 2004/099608 by the present applicant provides a solution for allowing operation of the wind turbine in a broader wind speed range. The solution comprises the use of flexible surface mounted flaps, which can be used to lower the lift of an outboard part of a wind turbine blade. The surface mounted flaps are activated by use activation means, which may comprise an electromagnetic actuator, i.e. a part which is mechanically attached to the surface mounted flap and which may be activated by use of an electromagnet. The embodiments described cover only actively regulated flaps and not passively regulated flaps.

WO 02/38442 describes a wind turbine blade provided with microtabs, which similar to the previously mentioned surface mounted flaps may be activated by use of an electromagnet actuator.

### Disclosure of the Invention

It is an object of the invention to obtain a new wind turbine blade, and which overcomes or ameliorates at least one of the disadvantages of the prior art or which provides a useful alternative.

According to a first aspect of the invention, the lift regulating device comprises a magnetisable material. Thereby, it is possible to repel or attract the lift guiding device away from or towards the surface of the blade without the use of an actuator connected to the lift regulating device. Thus, the lift regulating device may actively be regulated between for instance a deployed and a retracted state, and the lift regulating device may in the deployed state automatically (or passively) regulate to fluctuations in the wind and thus alleviate load and lift fluctuations. Accordingly, the invention provides a solution, where the lift regulating device may both be operated passively and actively.

The lift regulating device is contemplated to regulate the lift of the blade so that the wind turbine may be operated safely at higher wind speeds compared to blades of a wind turbine not having the lift regulating device. The lift regulating device is contemplated to reduce the load when the wind speed increases.

According to the invention, the lift regulating device comprises one or more surface mounted flaps. The combination of active and passive regulation is particularly suited for this type of lift regulating device.

The surface mounted flaps may advantageously be of the type that comprise a first side and a second side as well as a first end and a second end, and wherein the flaps in a deployed state is attached to the surface along one of said sides only and optionally one of said ends only.

According to the invention, the operation device is not mechanically engaged with the surface mounted flap(s).

The operation device may advantageously be contained within an interior of the blade.

The lift regulating device may be located at the suction side of the blade or in the alternative at the pressure side of the blade. Yet again, the blade may comprise a first lift regulating device at the suction side of the blade and a second lift regulating device at the pressure side.

The profiled contour may generate a lift when being impacted by incident airflow, and in the radial direction, the profiled contour may be divided into a root region with a substantially circular or elliptical profile closest to the hub, an airfoil region with a lift generating profile furthest away from the hub, and preferably a transition region between the root region and the airfoil region. The transition region may have a profile changing gradually in the radial direction from the circular or elliptical profile of the root region to the lift generating profile of the airfoil region.

According to an advantageous embodiment, the lift regulating device is located in the airfoil region of the blade. In one embodiment, the lift regulation device is located in an outboard part of the airfoil region. The lift regulation device may advantageously be used for lowering the lift of a section of the blade so that the blade may be used at higher wind speed and/or the blades can be made longer than conventional blades.

In one advantageous embodiment, the lift regulating device is biased away from the surface of the blade and activation of the operation device attracts the lift regulating device towards the surface of the blade or deflects the lift regulating device away from the surface of the blade. In this embodiment, the lift regulating device passively alleviate load fluctuations, when the operation device in not activated. In this embodiment, the lift regulating device does not need to comprise any permanent magnets.

According to another advantageous embodiment, the operation device comprises a plurality of electromagnets, the plurality of electromagnets being operable individually. Thereby, it is possible to regulate, preferably lower, the lift of various sections of the blade.

In yet another embodiment, the lift regulating device comprises a first permanent magnet positioned so that an electromagnet in the operation device may operate the lift regulating device reversibly from the first state to the second state by repulsing the permanent magnet relative to the electromagnet. In this embodiment, the lift regulating device passively alleviates load fluctuations, when the electromagnet repulses the lift regulating device. Alternatively, the lift regulating device comprises a first permanent magnet positioned so that an electromagnet in the operation device may operate the lift regulating device reversibly from the first state to the second state by attracting the permanent magnet towards the electromagnet.

According to one advantageous embodiment, the lift regulating device comprises a plurality of permanent magnets arranged at discrete sites of the lift regulating device. Thereby, it is possible to control the lift regulating individually at the discrete sites. An electromagnetic device may be associated with each of the permanent magnets.

In principle, it is also possible to arrange the electromagnetic device within the lift regulating means and providing a magnetisable material or a permanent magnet in the blade itself.

According to a second aspect, the invention provides a wind turbine having a number of wind turbine blades, preferably two or three, according to any of the aforementioned embodiments. Thus, the invention provides a wind turbine configured to convert wind energy to electrical energy, the wind turbine comprising: a tower having a first and an opposite second end, a nacelle positioned at the first end of the tower, a substantially horizontal rotor shaft rotatable mounted in the nacelle, a hub mounted at the rotor shaft, a blade for a rotor of a wind turbine having a substantially horizontal rotor shaft, the blade extending in a substantially radial direction from the hub, the blade comprising: a profiled contour comprising a pressure side and a suction side and a leading edge and a trailing edge connecting the pressure side and the suction side, and a lift regulating device comprising a magnetisable material and an operation device comprising an electromagnet configured to operate the lift regulating device between a first state and a second state.

According to an advantageous embodiment, the wind turbine comprises a sensor for sensing wind conditions, the sensor transmitting signals representing the state of wind conditions to the operation device so as to operate the lift regulating device in response to changes in wind conditions. The sensor may be positioned in a blade of the wind turbine.

According to a third aspect, the invention provides a method of operating a wind turbine according to any of the aforementioned embodiments, wherein the method comprises the steps of: a) obtaining information regarding current wind conditions at the wind turbine, b) determining lift regulating device settings based on the current wind conditions, and c) adjusting the lift regulating device based on the lift regulating device settings using the electromagnet.

According to one embodiment, the wind turbine comprises a wind sensor and the method comprises obtaining wind condition information from the wind sensor. The sensor may for instance be a pitot tube, a laser Doppler anemometer or any other suitable sensor.

### Brief Description of the Drawings

The present invention will be discussed in more detail below with reference to the drawings in which:
- Fig. 1: is a schematic illustration of a wind turbine,
- Fig. 2: is a schematic illustration of a blade,
- Fig. 3: is a schematic illustration of a part of a blade, and
- Fig. 4: is a schematic illustration of a graph illustrating the method.

### Detailed description of the Invention

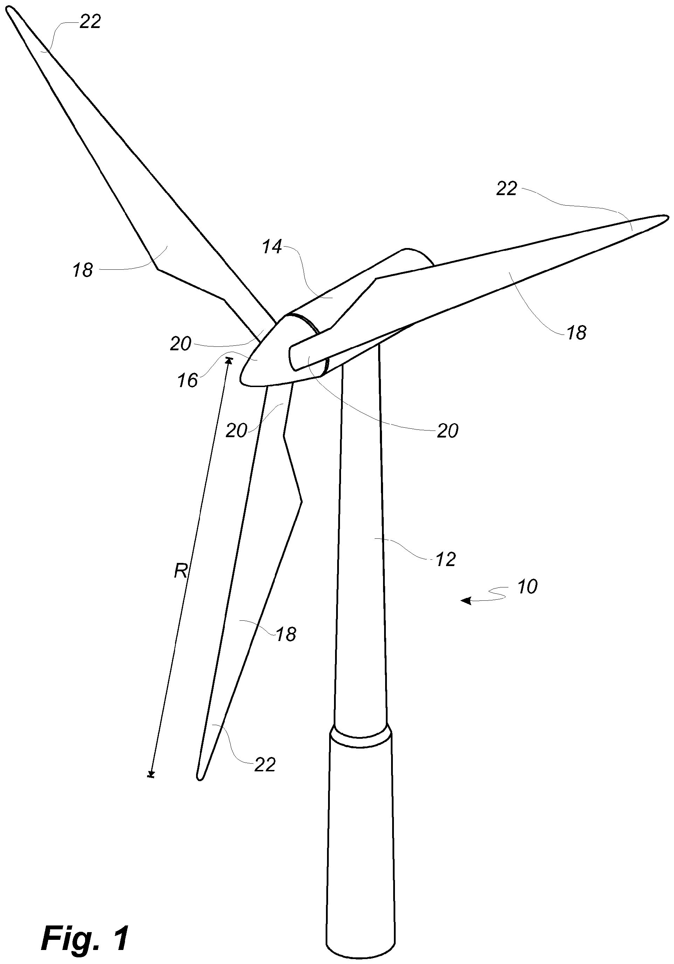

Fig. 1 illustrates a modern upwind wind turbine 10 according to the so-called "Danish concept" with a tower 12, a nacelle 14 and a rotor with a substantially horizontal rotor shaft. The rotor includes a hub 16 and three blades, each denoted the reference numeral 18, extending radially from the hub 16, each having a blade root 20 nearest to the hub 16 and a blade tip 22 furthest away from the hub 16. The rotor radius is illustrated by the line denoted R extending from the hub 16 to the end of the tip 22.

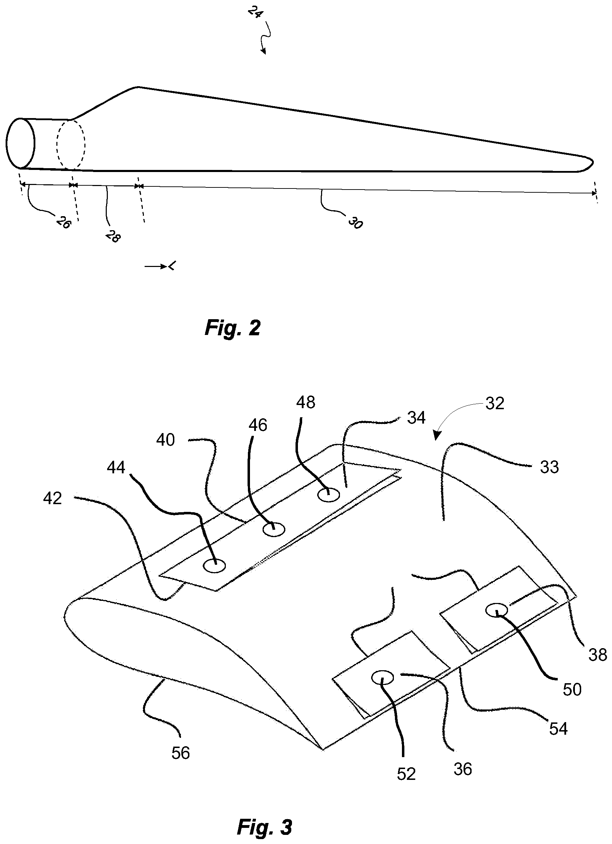

Fig. 2 is a schematic illustration of a blade 24, similar to the blades 18 in Fig. 1. The blade 24 comprises a profiled contour comprising a pressure side and a suction side. Further, the blade 24 comprises a leading edge and a trailing edge connecting the pressure side and the suction side. A chord extends between the leading edge and the trailing edge. The profiled contour of the blade 24 generates a lift when being impacted by incident airflow.

In the radial direction, the profiled contour is divided into a root region 26 with a substantially circular or elliptical profile closest to the hub 16. The profiled contour further comprises an airfoil region 30 with a lift generating profile furthest away from the hub 16. Preferably, the blade 24 comprises a transition region 28 between the root region 26 and the airfoil region 30. The transition region 28 has a profile changing gradually in the radial direction from the circular or elliptical profile of the root region 26 to the lift generating profile of the airfoil region 30.

Fig. 3 is a schematic view of a part of a blade 32, seen in perspective. The blade 32 comprises a first lift regulating device 34, a second lift regulating device 36 and a third lift regulating device 38, all in form of surface mounted flaps.

Each of the lift regulating devices comprise permanent magnets, and operation devices (not shown) comprising an electromagnet are configured to operate the lift regulating device between a first state and a second state. The operation devices are advantageously contained within the blade itself.

The first lift regulating device 34 comprises three permanent magnets 44, 46 and 48, and an operation device, not illustrated here, may be used at the position of the magnets 44, 46, 48 in order to regulate the first lift regulating device 34 gradually between a first state, where the lift regulating device 34 is flush with the surface of the profiled contour 32, and a second state, where the lift regulating device 34 is at its maximum lift regulating or deployed state. The lift regulating devices are located in the airfoil region 30 of the blade 24. In other embodiments, the lift regulating device may be placed in other parts or regions of the blade. But in an advantageous embodiment, the lift regulating device is located in an outboard part of the airfoil region.

The blade 24 may have a lift regulating device 34 located at the pressure side 56 of the blade 32, or as shown in Fig. 3 at the suction side 33 of the blade 32. The blade 32 may include a lift regulating device 34 located at the suction side 33 of the blade and an additional lift regulating device located at the pressure side 56 of the blade 24.

The operation device, not illustrated, as mentioned comprises an electromagnet. The electromagnet is used to provide a force in a direction away from the blade 24. The force is contemplated to move the lift regulating device 34 from the first position and towards the second position. The electromagnet may be operated by changing the current in the electromagnet. The current may be changed in steps or smoothly.

It is contemplated that the blade including the lift regulating device allows the blade to be in operation at higher wind speeds compared to blades not having the lift regulating device and the same profiled contour.

In one embodiment, the lift regulating device is biased away from the profiled contour in its unstressed state. In such an embodiment, the biased lift regulating device acts as a passive regulator in fluctuations in the loads, and the activation of the operation device is an active regulation of the lift of the blade.

In one embodiment, the operation device may comprise a plurality of electromagnets. The plurality of electromagnets may be operated individually so that the different longitudinal positions of the first lift regulating device may be controlled individually, e.g. at the positions of the three magnets 44, 46, 48. Thus, the electromagnet at 48 may exerts a higher force on the flap 34 than the force exerted by the electromagnet at 46 as shown in Fig. 3.

Equivalently, the second lift regulating device 36 comprises a permanent magnet 52, and is controlled via another electromagnet (not shown), and the third lift regulating device 38 comprises a permanent magnet 50, and is controlled via yet another electromagnet (not shown).

The surface mounted flaps may be operated in a repulsion mode or an attraction mode, such that by activation of the operation device, the flap is pushed away from the surface of the blade or is attracted towards the blade surface. If the flap 34 is biased away from the surface of the blade 32, the electromagnets at 44, 46 and 48 may be used for attracting the flap 34 towards the surface of the blade 32. Even though the flap 34 may be biased away from the surface of the blade 32, the electromagnets at 44, 46 and 48 may also be used for repelling the flap 34 further away from the surface.

The electromagnets at 44, 46 and 48 may be controlled by a single operation device.

In one embodiment, the blade 32 comprises a first plurality of lift regulating devices 34, 36, 38. Each lift regulating device 34, 36, 38 may comprise multiple electromagnets being operable individually and/or in groups. The individual operation of the electromagnets is contemplated to allow an accurate operation of the lift regulating device in response to changes in wind conditions.

In one embodiment, the lift regulating device may comprise a first permanent magnet positioned so that an electromagnet in the operation device may operate the lift regulating device reversibly from the first state to the second state by either repulsing or attracting the permanent magnet. The permanent magnet is contemplated to ensure that the response of the lift regulating device is increased.

In one embodiment, the lift regulating device comprises a plurality of permanent magnets arranged at discrete sites of the lift regulating device. In the present context, the term discrete sites means different locations, e.g. a plurality of magnets positioned at remote sites.

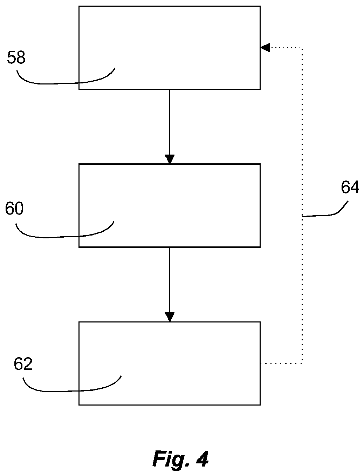

Fig. 4 is a schematic illustration of a method of operating a wind turbine configured to convert wind energy to electrical energy and comprising a wind turbine blade according to any of the aforementioned embodiments.

The method may comprise a step of obtaining 58 information regarding current wind conditions at the wind turbine, a step of determining 60 lift regulating device settings based on the current wind conditions, and finally a step of adjusting 62 the lift regulating device based on the lift regulating device settings using the electromagnet.

The steps 58, 60 and 62 above may be repeated as indicated by the punctured line 64. Thus, the regulation may be carried out continuously.

The wind turbine may comprise a wind sensor configured to detect wind conditions in a region near the wind turbine. The wind sensor may be positioned outside or remote from the wind turbine. The wind sensor may be constituted by several sensors. The wind sensor may supply information regarding the current wind conditions to the wind turbine. It is contemplated that at any given time, the operation of the lift regulating device relative to the current wind conditions is advantageous as that allows the lift regulating device to reduce the lift if the wind speed is too high for the blade profile alone. The profiled contour provides certain properties and a certain cut-out wind speed. Also, if the lift regulating device is deployed or activated and the wind speed decreases, the lift regulating device may be retracted or deactivated to increase the lift.

The method may be performed continuously while the wind turbine is in operation. The wind conditions may be monitored periodically and the settings of the lift regulating device may be determined and set based on newly determined wind conditions. The method may also be performed in other ways, for instance the wind conditions may be monitored at all times, and when the wind changes outside a predetermined range from the current settings a new set of lift regulating device settings may be determined.

## Claims

1. A wind turbine blade (18) for a rotor of a wind turbine (10) having a substantially horizontal rotor shaft and a hub (16) connected to the rotor shaft, the blade (18) extending in a substantially radial direction from the hub (16), when mounted to the hub (16), wherein the blade (18) comprises:
- a profiled contour comprising a pressure side and a suction side and a leading edge and a trailing edge connecting the pressure side and the suction side,
- a lift regulating device comprising one or more surface mounted flaps (34, 36, 38), and
- an operation device comprising an electromagnet configured to operate the lift regulating device between a first state and a second state, and
- the lift regulating device comprises a magnetisable material, **characterised in that**
- the operation device is not mechanically engaged with the surface mounted flap(s) (34, 36, 38).

2. A blade according to claim 1, wherein the surface mounted flaps (34, 36, 38) comprise a first side and a second side as well as a first end and a second end, and wherein the flaps (34, 36, 38) in a deployed state is attached to the surface along one of said sides only and optionally one of said ends only.

3. A blade according to any of the preceding claims, wherein the operation device is contained within an interior of the blade (18).

4. The blade according to any of the claims 1-3, wherein the lift regulating device is biased away from the surface of the blade (18) and activation of the operation device attracts the lift regulating device towards the surface of the blade (18) or deflects the lift regulating device away from the surface of the blade (18).

5. The blade according to any of the claims 1-4, wherein the operation device comprises a plurality of electromagnets, the plurality of electromagnets being operable individually.

6. The blade according to any of the preceding claims, wherein the lift regulating device comprises a plurality of permanent magnets (44, 46, 48, 50, 52) arranged at discrete sites of the lift regulating device.

7. A wind turbine (10) comprising a rotor with a number of blades (18), preferably two or three, according to any of the preceding claims.

8. A wind turbine according to claim 7, wherein the wind turbine (10) comprises a sensor for sensing wind conditions, the sensor transmitting signals representing the state of wind conditions to the operation device so as to operate the lift regulating device in response to changes in wind conditions.

9. The wind turbine according to claim 8, wherein the sensor is positioned in a blade (18).

10. A method of operating a wind turbine according to any of claims 7-9, the method comprising the steps of:
a) obtaining (58) information regarding current wind conditions at the wind turbine (10),
b) determining (60) lift regulating device settings based on the current wind conditions, and
c) adjusting (62) the lift regulating device based on the lift regulating device settings using the electromagnet.

11. The method according to claim 10, wherein the wind turbine (10) comprises a wind sensor and the method comprises obtaining wind condition information from the wind sensor.

## Patentansprüche

1. Windkraftanlagenflügel (18) für einen Rotor einer Windkraftanlage (10) mit einer im Wesentlichen horizontalen Rotorwelle und einer mit der Rotorwelle verbundenen Nabe (16), wobei sich der Flügel (18) in einer im Wesentlichen radialen Richtung von der Nabe (16) erstreckt, wenn er an der Nabe (16) angebracht ist wobei der Flügel (18) Folgendes umfasst:
- eine Profilkontur, umfassend eine Druckseite und eine Saugseite und eine Eintrittskante und eine Austrittskante, die die Druckseite und die Saugseite verbinden,
- eine Auftriebsregulierungsvorrichtung, umfassend eine oder mehrere oberflächenmontierte Klappen (34, 36, 38), und
- eine Betätigungsvorrichtung, umfassend einen Elektromagneten, der dazu konfiguriert ist, die Auftriebsregulierungsvorrichtung zwischen einem ersten Zustand und einem zweiten Zustand zu betätigen, und
- wobei die Auftriebsregulierungsvorrichtung ein magnetisierbares Material umfasst, **dadurch gekennzeichnet, dass**
- sich die Betätigungsvorrichtung mit der bzw. den oberflächenmontierten Klappe(n) (34, 36, 38) nicht in mechanischem Eingriff befindet.

2. Flügel nach Anspruch 1, wobei die oberflächenmontierten Klappen (34, 36, 38) eine erste Seite und eine zweite Seite sowie ein erstes Ende und ein zweites Ende umfassen, und wobei die Klappen (34, 36, 38) in einem ausgefahrenen Zustand entlang nur einer der Seiten und optional nur eines der Enden an der Oberfläche befestigt sind.

3. Flügel nach einem der vorangehenden Ansprüche, wobei die Betätigungsvorrichtung in einem Innenbereich des Flügels (18) aufgenommen ist.

4. Flügel nach einem der Ansprüche 1-3, wobei die Auftriebsregulierungsvorrichtung von der Oberfläche des Flügels (18) weg gespannt ist und die Aktivierung der Betätigungsvorrichtung die Auftriebsregulierungsvorrichtung in Richtung der Oberfläche des Flügels (18) anzieht oder die Auftriebsregulierungsvorrichtung von der Oberfläche des Flügels (18) weg abstößt.

5. Flügel nach einem der Ansprüche 1-4, wobei die Betätigungsvorrichtung eine Vielzahl von Elektromagneten umfasst, wobei die Vielzahl von Elektromagneten einzeln betätigbar sind.

6. Flügel nach einem der vorangehenden Ansprüche, wobei die Auftriebsregulierungsvorrichtung eine Vielzahl von Permanentmagneten (44, 46, 48, 50, 52) umfasst, die an getrennten Stellen der Auftriebsregulierungsvorrichtung angeordnet sind.

7. Windkraftanlage (10), umfassend einen Rotor mit einer Anzahl von Flügeln (18), vorzugsweise zwei oder drei, nach einem der vorangehenden Ansprüche.

8. Windkraftanlage nach Anspruch 7, wobei die Windkraftanlage (10) einen Sensor zum Abfühlen von Windverhältnissen umfasst, wobei der Sensor den Zustand von Windverhältnissen repräsentierende Signale zu der Betätigungsvorrichtung überträgt, um die Auftriebsregulierungsvorrichtung als Reaktion auf Änderungen der Windverhältnisse zu betätigen.

9. Windkraftanlage nach Anspruch 8, wobei der Sensor in einem Flügel (18) positioniert ist.

10. Verfahren zum Betreiben einer Windkraftanlage nach einem der Ansprüche 7-9, wobei das Verfahren folgende Schritte umfasst:
a) Erhalten (58) von aktuelle Windverhältnisse an der Windkraftanlage (10) betreffenden Informationen,
b) Bestimmen (60) von Einstellungen der Auftriebsregulierungsvorrichtung basierend auf den aktuellen Windverhältnissen, und
c) Einstellen (62) der Auftriebsregulierungsvorrichtung basierend auf den Einstellungen der Auftriebsregulierungsvorrichtung unter Verwendung des Elektromagneten.

11. Verfahren nach Anspruch 10, wobei die Windkraftanlage (10) einen Windsensor umfasst und das Verfahren das Erhalten von Windverhältnisinformationen von dem Windsensor umfasst.

## Revendications

1. Pale d'éolienne (18) pour un rotor d'une éolienne (10) ayant un arbre de rotor sensiblement horizontal et un moyeu (16) raccordé à l'arbre de rotor, la pale (18) s'étendant dans une direction sensiblement radiale depuis le moyeu (16), quand elle est montée sur le moyeu (16), dans laquelle la pale (18) comporte :
- un contour profilé comportant un côté en pression et un côté en dépression et un bord d'attaque et un bord de fuite raccordant le côté en pression et le côté en dépression,
- un dispositif de régulation de la portance comportant un ou plusieurs volets montés en surface (34, 36, 38), et
- un dispositif de fonctionnement comportant un électroaimant configuré pour faire fonctionner le dispositif de régulation de la portance entre un premier état et un deuxième état, et
- le dispositif de régulation de la portance comporte un matériau magnétisable, **caractérisée en ce que**
- le dispositif de fonctionnement n'est pas mécaniquement mis en prise avec le (ou les) volet(s) monté(s) en surface (34, 36, 38).

2. Pale selon la revendication 1, dans laquelle les volets montés en surface (34, 36, 38) comportent un premier côté et un deuxième côté ainsi qu'une première extrémité et une deuxième extrémité, et dans laquelle les volets (34, 36, 38) dans un état déployé sont attachés sur la surface le long d'un desdits côtés uniquement et éventuellement le long d'une desdites extrémités uniquement.

3. Pale selon l'une quelconque des revendications précédentes, dans laquelle le dispositif de fonctionnement est contenu dans une partie intérieure de la pale (18).

4. Pale selon l'une quelconque des revendications 1 à 3, dans laquelle le dispositif de régulation de la portance est sollicité à l'opposé de la surface de la pale (18) et l'actionnement du dispositif de fonctionnement attire le dispositif de régulation de la portance vers la surface de la pale (18) ou dévie le dispositif de régulation de la portance à l'opposé de la surface de la pale (18).

5. Pale selon l'une quelconque des revendications 1 à 4, dans laquelle le dispositif de fonctionnement comporte une pluralité d'électroaimants, la pluralité d'électroaimants fonctionnant individuellement.

6. Pale selon l'une quelconque des revendications précédentes, dans laquelle le dispositif de régulation de la portance comporte une pluralité d'aimants permanents (44, 46, 48, 50, 52) agencés au niveau de sites discrets du dispositif de régulation de la portance.

7. Éolienne (10) comportant un rotor avec un certain nombre de pales (18), de préférence deux ou trois, selon l'une quelconque des revendications précédentes.

8. Éolienne selon la revendication 7, dans laquelle l'éolienne (10) comporte un capteur servant à détecter des conditions du vent, le capteur transmettant des signaux représentant l'état des conditions du vent au dispositif de fonctionnement de manière à faire fonctionner le dispositif de régulation de la portance en réponse à des changements des conditions du vent.

9. Éolienne selon la revendication 8, dans laquelle le capteur est positionné dans une pale (18).

10. Procédé de fonctionnement d'une éolienne selon l'une quelconque des revendications 7 à 9, le procédé comportant les étapes consistant à :
a) obtenir (58) des informations se rapportant aux conditions en cours du vent au niveau de l'éolienne (10),
b) déterminer (60) les réglages du dispositif de régulation de la portance en se basant sur les conditions en cours du vent, et
c) ajuster (62) le dispositif de régulation de la portance en se basant sur les réglage du dispositif de régulation de la portance en utilisant l'électroaimant.

11. Procédé selon la revendication 10, dans lequel l'éolienne (10) comporte un capteur de vent et le procédé comporte l'étape consistant à obtenir des informations se rapportant aux conditions du vent en provenance du capteur de vent.
